# EUROPEAN PATENT SPECIFICATION

(11) **EP 1 181 147 B1**
(45) Date of publication and mention of the grant of the patent: **21.05.2003**
(21) Application number: 00921195.4
(22) Date of filing: 01.03.2000
(51) Int. Cl.: B29C 65/14, B29B 13/02, B65B 7/14, B29C 65/16

(54) **APPARATUS IN A TUBE FILLING AND SEALING MACHINE FOR HEATING A PORTION OF THE INSIDE OF A PLASTICS PACKAGING TUBE**
EINRICHTUNG IN EINER FÜLL- UND SIEGELMASCHINE ZUM ERHITZEN EINES TEILS DES INNEREN EINER KUNSTTOFF-VERPACKUNGS-RÖHRE
APPAREIL D'UNE MACHINE DE REMPLISSAGE ET SCELLAGE DE TUBES POUR LE CHAUFFAGE D'UNE PARTIE DE L'INTERIEUR D'UN TUBE D'EMBALLAGE DE MATIERES PLASTIQUES

(30) Priority: 29.03.1999 DE 29905766 U
(43) Date of publication of application: 27.02.2002
(73) Proprietor: NORDEN PAC DEVELOPMENT AB, S-391 28 Kalmar (SE)
(72) Inventor: LINNER, Hans, S-392 36 Kalmar (SE)
(74) Representative: Graudums, Valdis
(86) International application number: SE0000401
(87) International publication number: WO00058074

(56) References cited:
- WO-A1-99/02330
- US-A- 3 769 117
- US-A- 4 511 426

## Description

### FIELD OF THE INVENTION:

The invention relates to an apparatus in a tube filling and sealing machine for heat-activation of a portion of the interior surface of a plastics packaging tube which is open at one end, as defined in the preamble of claim 1.

The sealing process in such machines comprises two steps, first heat-activation of the inner surface of an open end of a plastics tube which is to be sealed and then clamping the end together between sealing jaws.

### BACKGROUND TO THE INVENTION:

In order to provide a transverse seal at the open end of a flexible plastics tube, it is known to insert a hot air heating device into said open end (see US-A-4 511 426). Hot air is then forced out through a plurality of small openings in the nozzle of said open end and around the inner periphery of the tube, so as to activate the inner surface of the plastics tube all the way around its inner periphery. The term "activation" means the softening of the material on the inner surface of the tube to an extent such that when a mechanical clamping force and cooling is applied to the outer surface of said hollow tube and the tube is flattened, the opposing internal surfaces are sealed together by fusion there between. The actual temperature required to activate the plastics material depends on the plastic material concerned.

Whilst such a solution has proven to be a valuable improvement over other available arrangements, the device normally has a hot air nozzle made of metal which itself requires time to reach operating temperature. Thus, transient effects of starting-up the device have to be taken into account when operating the device so that the correct temperature is obtained.

Additionally, the appearance and type of seal or weld-seam obtainable by the hot-air technique is inherently restricted to the design of the hot-air nozzle, specifically the hot-air outlets.

If for instance a "fancy" design is desirable, say a sealed tube end reminding the curvature of a hand or foot, this requires a specific nozzle design for each "fancy" end seal.

WO 99/02330 discloses an apparatus according to the preamble of claim 1.

### SUMMARY OF THE PRESENT INVENTION:

The present invention seeks to obviate the aforesaid disadvantages by providing an apparatus in accordance with claim 1, wherein the energy from a light source is used to accurately and selectively activate the desired area(s) of the plastics material.

Preferred features of the invention are defined in the dependent claims.

With the apparatus of the invention, excellent control of the heat dissipation in and around the sealing zone is obtained, by suitable control of the intensity of the light beam which emanates from the source, and by arranging a heat sink outside the tube at a level essentially corresponding to the one where, on the tube inside, the spot type light beam acts. By arranging the heat sink as a cylindrical sleeve or ring having an inner diameter essentially equal to the nominal diameter of the tube, said heat sink will be useful also for presenting a perfectly round, circular tube end for heat activation, and the tube end will be centred, having the same axial centre line as the tube support and the cylindrical heat sink.

Also, the invention allows the light source and associated equipment to be located completely outside the tube end at a remote location. Such an arrangement can lead to an increase in the filling level (i.e. the proportion of the tube which is filled) and an increase in processing speed.

### BRIEF DESCRIPTION OF THE DRAWINGS:

The invention will now be described with reference to certain non-limiting embodiments thereof depicted in Figs. 1 to 8, in which
- Fig. 1: shows a first embodiment of the invention with a laser light source directed on to the upper open end of a plastics tube which is made to rotate,
- Fig. 2: shows a second embodiment of the invention similar to Fig. 1 but in which an angled reflecting or refracting surface is used,
- Fig. 3: shows schematically a section of an intermittently operating tube filling machine, where the heating station and clamping station are shown, and the heating station is operating,
- Fig. 4: shows the same section as in figure 3, but with the clamping station operating,
- Fig. 5: shows schematically the means for rotating the tube support and the tube,
- Fig. 6: shows the damping jaws in an active position,
- Fig. 7: shows a schematic cross section of a multi light source arrangement for heat activation of a tube, and
- Fig. 8: is a view from above of the arrangement in fig. 7.

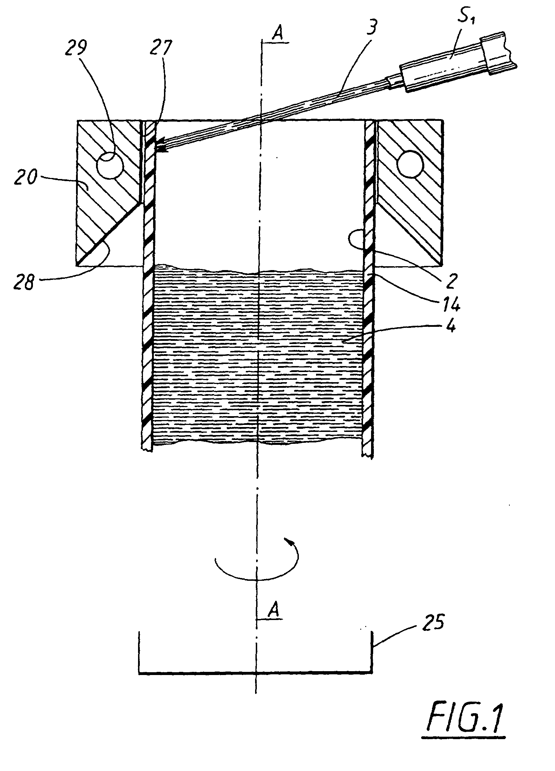

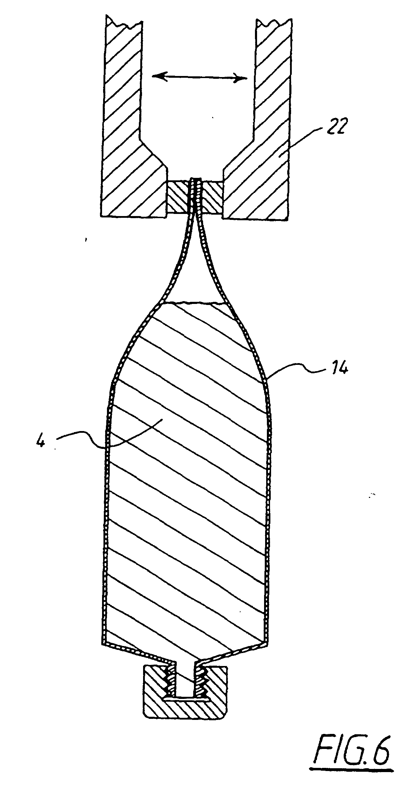

In Fig. 1, a source of light such as a laser source S₁ is arranged such that its light beam 3 is directed onto the inner surface 2 of a tube 14 at a particular level. The level chosen is the location which is later to be clamped together by sealing jaws (Fig. 6) so as to form the seal once the inner surface has been activated.

The tubes are plastics tubes or plastics laminated tubes made for example by extrusion or co-extrusion. Typically PE or PP tubes are used, although other types are possible.

The beam is of the spot light type such that it has a spread (i.e. an extent) in the vertical direction which is adequate to provide a suitable seal width. Typically such a spread would be 2 or more millimetres.

At the open end thereof, the filled tube is inserted into a cylindrical sleeve or ring 20, having a through going central circular opening 27 therein. The diameter of the opening is essentially equal to the nominal tube diameter. As the tubes, coming from transport boxes and forwarded to the heating station in the tube filling and sealing machine, at their open ends, may have a cross section other than perfectly circular, this means that in the heating station in figure 1, the tube end outside will be brought into close, but slideable, contact with the walls of the opening 27 and centred with respect to line A-A. The insertion into the opening is facilitated by the truncated conical entering surface 28.

By being provided with a conduit 29 for a cooling medium, the sleeve 20 and the walls of the opening 27 are maintained at a temperature level for transferring, by conduction, any excess of heat energy at the tube outside to the sleeve and the cooling medium. This means that the sleeve acts as a heat sink preventing deformation of the tube end, particularly the outside thereof, in case the heat energy supply to the tube inside would be too high.

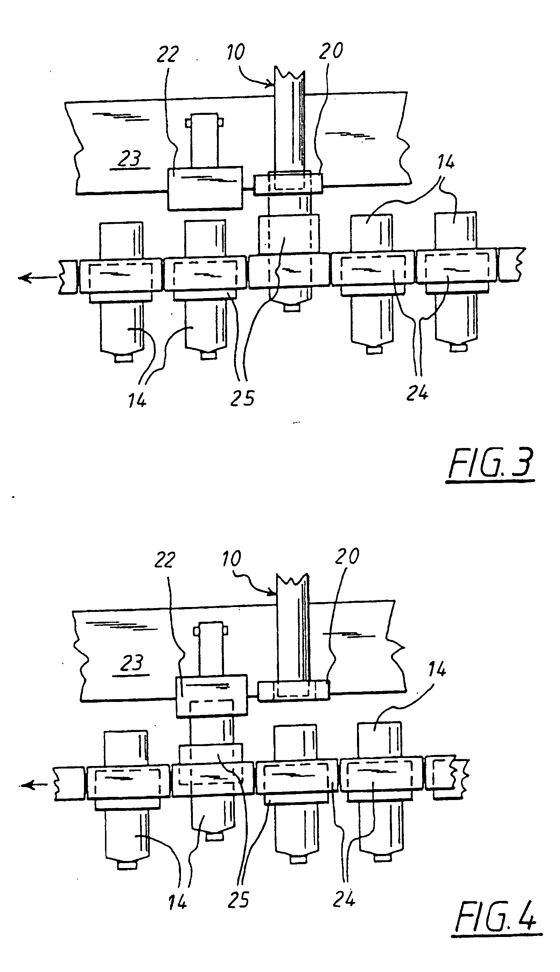

Applied in a tube filling and sealing machine, the laser arrangement of figure 1 is incorporated in station 10 in figures 3 and 4. An endless conveyor composed of chain links 24 carries in each link a tube support 25, each carrying a tube 14.

In the heating station 10, there is arranged means (not shown) for lifting the tube support 25 and the tube to an elevated position. In this position, the tube support 25 (as shown in figure 3) is at a level above the conveyor links 24 and the tube end is inserted into the heat sink sleeve 20 as shown in figure 1.

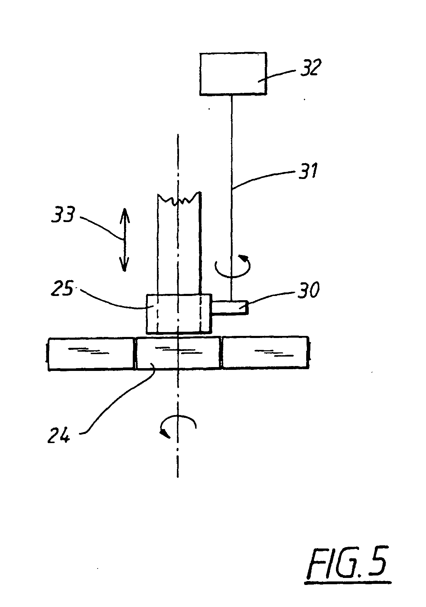

In this elevated position, the tube support, journalled for rotation, is engaged by a rotating disc 30 (fig. 5) driven by a rotating shaft 31 from a motor 32. The rotation speed of the tube may be several hundred rpm. without causing outflow of the contents 4 of the tube. The heat sink sleeve 20 will not disturb the rotation, instead the transfer of any excess of heat energy will be improved, just because of the rotation and the sliding contact.

On said rotation of the tube support 25 and tube, there may be superimposed an oscillation in the longitudinal axis of the tube. Such superimposed oscillation can be used for widening the extension of the heat activated region in the direction of the longitudinal axis of the tube or, which is most interesting, to design said "fancy" types of seals mentioned in the introduction of the specification.

Taking into consideration the impact of the heat balance from the temperature adjustable heat sink 20 (sleeve), the output power of the laser S₁ is adjusted such that the intensity of the beam 3 at the inner surface only causes the inner surface to be activated but does not cause the outer surface to become deformed. In this way, distortion of the tube which might affect any printing thereon can be kept to a minimum. For each type of plastics material and application, the required intensity can be determined by simple experimentation.

After the heating of the inner surface of the tube in station 10 in figure 3, the tube is forwarded one step to the clamping station where clamping jaws 22 (see also Fig. 6) press the heat activated tube inner surface into a transverse or other type of end seal. Normally, the clamping jaws are cooled by means of an arrangement similar to the one for the heat sink sleeve.

As can be seen, no equipment needs to be located inside the closed volume of the tube 14. Thus, when the tubes are indexed into the heat-activation station and lifted by tube supports 25, the heat-activation can commence immediately.

Additionally, since no equipment is inside the tube, the level of the contents 4 may be higher. In particular, no heat shield will be required to protect the contents as is the case with hot air activation devices.

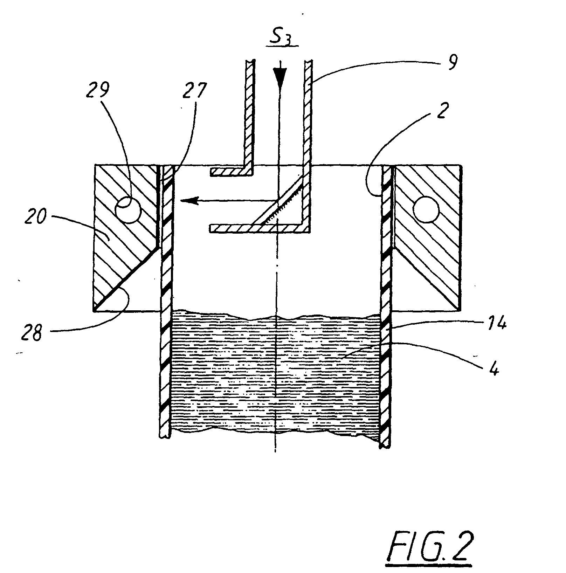

In a further embodiment of the invention as depicted in Fig. 2, light from a light source S₃ is directed down a light tube 9 towards a reflecting surface angled appropriately such that light reaches the inner surface 2 at the desired location.

In the embodiment depicted, the reflecting surface is arranged at approximately 45° to the incoming light beam, although the angle can be altered according to circumstances. For example, if it is desired to locate all the equipment outside of the open tube, the casing 9 and the reflecting surface can be arranged so that light can be re-directed on to the inner surface 2 by being reflected at a larger angle of incidence.

In the embodiment of Fig. 2, the tube 1 is rotated and, optionally, oscillated to heat around the internal periphery.

The operation of the clamping or sealing jaws in order to clamp the tube end together is shown schematically in Fig. 6 and does not need to be described in more detail here.

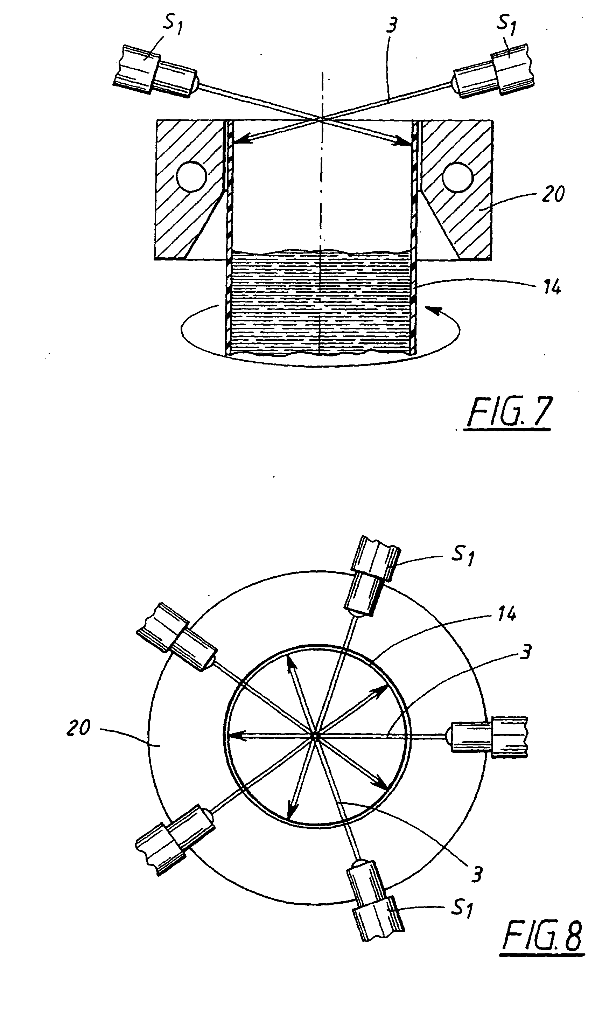

In the arrangement shown in figs. 7 and 8, the tube 14 is supported for rotation in the same manner as in the previous embodiments. Instead of having one single light source S₁, in the present case a laser source, there are in total five laser sources arranged at mutually equidistant angel positions around the perimeter of the tube 14 at a level somewhat above the open end of the tube.

Whilst the invention has been described with respect to certain preferred embodiments thereof, the invention is not limited thereto and may be varied widely within the scope of the appended claims.

For example, although the invention has been described with respect to a laser source(s), it is of course possible to use a different light source(s) and appropriate focusing means (e.g. optical focusing means) to obtain the required intensity at the appropriate location.

## Claims

1. Apparatus in a tube filling and sealing machine for heating a portion of the interior surface (2) of a hollow flexible plastics packaging tube (1) which is open at one end and where said portion to be heated is heat activateable for sealing, and said machine is provided with means for forwarding tubes to processing stations and means for supporting said tubes during transportation and processing, said apparatus having at least one light source (S₁, S₃) for providing heat-activation energy, means (S₁, 7, 10) for directing spot type light (3) from said at least one light source to a predetermined limited spot type area of said interior surface (2), **characterized in that** the apparates further comprises means (30, 31, 32) for rotating the tube around the longitudinal axis thereof for sweeping said heat activating limited spot type light around the perimeter of said interior surface, for activation of said interior surface at a predetermined level thereon, and a heat sink means (20) is arranged in a position for circumferentially enclosing the tube end outside at a level where said spot type light is swept, said heat sink means having a heat sink sleeve in rotational sliding contact with the tube for improving the transfer of any excess of heat energy, because of the rotation and the sliding contact.

2. Apparatus as in claim 1, **characterized in that** said heat sink means has a through going circular opening (27) of a diameter essentially corresponding to the tube nominal diameter, and that, the end of the opening facing the open tube end before the tube is inserted in said opening, is formed as a widening truncated conical end portion (28) forming an entering portion.

3. Apparatus as in claim 2, **characterized in that** said heat sink means has a passage (29) for a cooling medium.

4. Apparatus as in anyone or any of the preceding claims, **characterized in that** means are provided for lifting said tube support means (25) for inserting said open tube end in said heat sink means opening (27).

5. Apparatus as in anyone or any of the preceding claims, **characterized in that** oscillating means are arranged for said tube support means (25) in said heat activation position for defining a predetermined heat activated width or pattern by said at least one spot type light at said predetermined level.

6. Apparatus as in anyone or any of the preceding claims, **characterized in that** said at least one light source is a laser.

7. Apparatus as in anyone or any of the preceding claims, **characterized in that** said at least one light source comprises several light sources at mutual equidistant angel positions around the tube perimeter and at a level above the open tube end.

## Patentansprüche

1. Vorrichtung in einer Tubenfüll- und Verschließmaschine zur Erhitzung eines Abschnittes einer inneren Fläche (2) einer hohlen, flexiblen Kunststoff-Verpackungs-Tube (1), die an einer Seite offen ist und wo ein zu erhitzender Abschnitt wärme-aktivierbar ist zum Zwecke der Abdichtung und wobei die Maschine mit Mitteln zum Befördern der Tuben zu Verarbeitungsstationen und mit Mitteln zum Halten der Tuben während des Transportes und der Verarbeitung ausgestattet ist, wobei die Vorrichtung zumindest eine Lichtquelle (S₁, S₃) zum Bereitstellen von Wärmeenergie aufweist, Mittel (S₁, 7, 10) zum Richten eines punktartigen Lichtes (3) von wenigstens einer der Lichtquellen auf einen vorbestimmten, begrenzten, punktartigen Bereich der inneren Fläche (2), **dadurch gekennzeichnet, dass** die Vorrichtung weiterhin umfasst:
- Mittel (30, 31, 32) zur Rotation der Tube um die Längsachse derselben, so dass das wärme-aktivierbare begrenzte, punktartige Licht den Umfang der inneren Fläche zur Aktivierung der inneren Fläche bei einer vorbestimmten Höhe derselben überstreicht, und
- Hitzesenkmittel (20), das in einer Position angeordnet ist um das Tubenende außen über den Umfang zu umschließen in der Höhe, wo das punktartige Licht umläuft, wobei das Hitzesenkmittel einen Hitzesenkschlauch aufweist, der in rotierendem Gleitkontakt mit der Tube steht zur Verbesserung des Übergangs von jeglichem Überschuß von Wärmeenergie, aufgrund der Rotation und des Gleitkontaktes.

2. Vorrichtung nach Anspruch 1, **dadurch gekennzeichnet, dass** das Hitzesenkmittel eine durchgehende kreisförmige Öffnung (27) aufweist mit einem Durchmesser, der im wesentlichen dem Nominaldurchmesser der Tube entspricht und, dass das Ende der Öffnung auf der Seite des offenen Tubenendes, bevor die Tube in die Öffnung eingeführt wird, als ein sich verbreitender kegelstumpfartiger, konischer Endabschnitt (28) geformt ist, der einen Einführungsabschnitt bildet.

3. Vorrichtung nach Anspruch 2, **dadurch gekennzeichnet, dass** das Hitzesenkmittel einen Durchgang (29) aufweist für ein Kühlmittel.

4. Vorrichtung nach mindestens einem der vorstehenden Ansprüche, **dadurch gekennzeichnet, dass** die Mittel zum Anheben der Tubenhaltemittel (25) zur Verfügung gestellt sind, zum Einführen des offenen Tubenendes in die Öffnung (27) des Hitzesenkmittels.

5. Vorrichtung nach mindestens einem der vorstehenden Ansprüche, **dadurch gekennzeichnet, dass** die oszillierenden Mittel so angeordnet sind, dass die Tubenhaltemittel (25) in der Hitzeaktivierungsposition eine vorbestimmte wärme-aktivierte Breite oder ein Muster definieren, durch zumindest ein punktartiges Licht in vorbestimmter Höhe.

6. Vorrichtung nach mindestens einem der vorstehenden Ansprüche, **dadurch gekennzeichnet, dass** zumindest eine Lichtquelle ein Laser ist.

7. Vorrichtung nach mindestens einem der vorstehenden Ansprüche, **dadurch gekennzeichnet, dass** mindestens eine Lichtquelle mehrere Lichtquellen an wechselseitig äquidistanten Winkelpositionen um den Tubenumfang in darüber liegender Höhe das offene Tubenende umfasst.

## Revendications

1. Appareil dans une machine de remplissage et scellage pour chauffer une partie de la surface intérieure (2) d'un tube d'emballage creux en plastique souple (1) qui est ouvert à une extrémité et où ladite partie à chauffer peut être activée par la chaleur pour le scellage, et ladite machine est munie d'un moyen pour faire avancer les tubes jusqu'à des postes de traitement et d'un moyen pour supporter lesdits tubes pendant le transport et le traitement, ledit appareil ayant au moins une source de lumière (S₁, S₃) pour fournir de l'énergie d'activation thermique, un moyen (S₁, 7, 10) pour diriger de la lumière de type à faisceau concentré (3) depuis ladite au moins. une source de lumière jusqu'à une zone de type point limité prédéfini de ladite surface intérieure (2), **caractérisé en ce que** l'appareil comprend en outre un moyen (30, 31, 32) pour faire tourner le tube autour de son axe longitudinal pour balayer ladite lumière de type à faisceau concentré limité d'activation thermique autour du périmètre de ladite surface intérieure, pour l'activation de ladite surface intérieure à un niveau préalablement déterminé de celle-ci, et un moyen formant puits de chaleur (20) est placé en une position pour enfermer circonférentiellement l'extérieur de l'extrémité du tube à un niveau où ladite lumière de type à faisceau concentré est balayée, ledit moyen formant puits de chaleur comportant un manchon de puits de chaleur en contact glissant rotatif avec le tube pour améliorer le transfert de tout excès d'énergie thermique, grâce à la rotation et au contact glissant.

2. Appareil selon la revendication 1, **caractérisé en ce que** ledit moyen formant puits de chaleur comporte une ouverture circulaire débouchante (27) d'un diamètre correspondant essentiellement au diamètre nominal du tube, et **en ce que** l'extrémité de l'ouverture faisant face à l'extrémité ouverte du tube avant que le tube soit inséré dans ladite ouverture, est mise sous forme d'une partie d'extrémité tronconique évasée (28) formant une partie d'admission.

3. Appareil selon la revendication 2, **caractérisé en ce que** ledit moyen formant puits de chaleur comporte un passage (29) pour un milieu de refroidissement.

4. Appareil selon l'une quelconque des revendications précédentes, **caractérisé en ce que** des moyens sont prévus pour lever ledit moyen de support (25) de tube pour insérer ladite extrémité ouverte du tube dans ladite ouverture (27) du moyen formant puits de chaleur.

5. Appareil selon l'une quelconque des revendications précédentes, **caractérisé en ce que** des moyens oscillants sont agencés pour ledit moyen de support (25) de tube dans ladite position d'activation thermique pour définir une largeur ou motif prédéfini(e) activé(e) par la chaleur au moyen de ladite au moins une lumière de type à faisceau concentré au niveau préalablement déterminé.

6. Appareil selon l'une quelconque des revendications précédentes, **caractérisé en ce que** ladite au moins une source de lumière est un laser.

7. Appareil selon l'une quelconque des revendications précédentes, **caractérisé en ce que** ladite au moins une source de lumière comprend plusieurs sources de lumière en des positions angulaires mutuellement équidistantes autour du périmètre du tube et à un niveau situé au-dessus de l'extrémité ouverte du tube.
